# EUROPÄISCHE PATENTSCHRIFT

(11) **EP 2 716 827 B1**
(45) Veröffentlichungstag und Bekanntmachung des Hinweises auf die Patenterteilung: **15.03.2017**
(21) Anmeldenummer: 13187111.3
(22) Anmeldetag: 02.10.2013
(51) Int. Cl.: E03F 5/16

(54) **Flüssigkeits-Rückhaltevorrichtung**
Fluid retention device
Dispositif de retenue de liquide

(30) Priorität: 08.10.2012 DE 202012103849 U
(43) Veröffentlichungstag der Anmeldung: 09.04.2014
(73) Patentinhaber: IT Inventor GmbH, 48465 Samern (DE)
(72) Erfinder: Thannhäuser, Ingo, 48465 Samern (DE)
(74) Vertreter: Werner & ten Brink

(56) Entgegenhaltungen:
- EP-A1- 2 335 794
- GB-A- 304 595

## Beschreibung

Die Erfindung betrifft eine im Folgenden kurz als Rückhaltevorrichtung bezeichnete Flüssigkeits-Rückhaltevorrichtung, wie sie zum Beispiel aus der EP 2 335 794 A bekannt ist.

Flüssigkeits-Abscheidevorrichtungen (Abscheidevorrichtung) als Sonderform einer Rückhaltevorrichtung, insbesondere für zumindest zwei Flüssigkeiten, welche voneinander verschiedene spezifische Gewichte haben und im Wesentlichen nicht oder nur wenig mischbar sind, sind allgemein bekannt. Dabei wird ausgenutzt, dass sich die Flüssigkeit mit dem geringeren spezifischen Gewicht, also die leichtere Flüssigkeit, über der Flüssigkeit mit dem höheren spezifischen Gewicht, also der schwereren Flüssigkeit, sammelt und sich so nach einer Ruhezeit zwei übereinander geschichtete Phasen bilden. Aus der jeweiligen Phase kann dann die entsprechende Flüssigkeit im Wesentlichen rein gewonnen werden.

Bei einem Beispiel einer herkömmlichen Abscheidevorrichtung in Form eines nach oben offenen Ölabscheiders wie in der DE 102 55 750 A beschrieben, leitet ein schräger Regenfang Regenwasser in eine Rückspülkammer, so dass sich diese schneller füllt als ein Auffangbehälter, in dem sich Öl befindet. Hierdurch wird zwar zunächst verhindert, dass bei Regen Teile des auf dem sich sammelnden Regenwasser schwimmenden Ölfilms aus dem Auffangbehälter in die Rückspülkammer gelangen, jedoch tritt, wenn ein Flüssigkeitsspiegel im Auffangbehälter eine Trennwand zwischen Rückspülkammer und Auffangbehälter zunächst überschritten hatte, bei einem späteren Absinken des Flüssigkeitsspiegels Öl auch in die Rückspülkammer über. Ein Teil dieses Öls gelangt bei einem erneuten Anstieg des Flüssigkeitsspiegels in der Rückspülkammer nicht entlang einer Leitwand des Regenfangs zurück in den Auffangbehälter und verunreinigt so das aus der Rückspülkammer abfließende Wasser.

Derartige Abscheidevorrichtungen lassen zudem außer Acht, dass eine dort für die erreichbare Wirkung vorausgesetzte Phasentrennung häufig nicht gegeben ist, z. B. dann, wenn die spezifischen Gewichte beider Flüssigkeiten ähnlich sind, wie dies z. B. bei Wasser mit einem spezifischen Gewicht von 1,0 oder zumindest näherungsweise 1,0 und Esteröl mit einem spezifischen Gewicht von 0,977 gegeben ist. Solche Flüssigkeiten entmischen sich erst nach einer relativ langen Ruhezeit und bilden erst dann getrennte Phasen. Bis zur Entmischung liegen beide Flüssigkeiten als Emulsion vor. Besonders wenn in dem Auffangbehälter der Flüssigkeitsspiegel aufgrund von Regen ansteigt, ergibt sich durch das ständige Auftreffen der Regentropfen auf die Flüssigkeitsoberfläche eine Durchmischung, also eine Emulsion, des Wassers mit dem Öl. Bei der zuvor beschriebenen, bekannten Abscheidevorrichtung kommt es daher zumindest immer dann, wenn die vom Wasser abzuscheidende Flüssigkeit, z. B. Esteröl, mit Wasser in Emulsion vorliegt, gerade nicht zu einer Abscheidung und es fließt statt dessen die Emulsion ab. Der beabsichtigte Schutz der jeweiligen Umgebung vor Verunreinigungen durch Öl oder dergleichen tritt also gerade nicht ein.

Aus der EP 2 335 794 A ist eine Rückhaltevorrichtung bekannt, bei der im Anschluss an einen als Sammler bezeichneten Regenfang in Form eines Rampenbauteils eine Sperre vorgesehen ist und bei der unter dem Rampenbauteil eine Ablaufwanne sowie zwischen Sperre und Ablaufwanne ein zweiteiliger Kanal gebildet ist, nämlich ein Kanal mit einem diagonal abwärts gewandten Kanalabschnitt im Anschluss an das Rampenbauteil und ein horizontaler, in der Beschreibung der EP 2 335 794 A als Durchlass bezeichneter Kanalabschnitt im Anschluss an den ersten diagonalen Kanalabschnitt. Von dem Sammler aufgefangenes Regenwasser gelangt zunächst in den diagonalen Kanalabschnitt und von dort in den horizontal ausgerichteten Kanalabschnitt. Dabei ergibt sich eine Spülwirkung, derart, dass Verunreinigungen in Form von Öl oder dergleichen, die von außerhalb der Rückhaltevorrichtung in den horizontalen Kanalabschnitt oder den diagonalen Kanalabschnitt eintreten, aus den beiden Kanalabschnitten herausgespült werden. Auf diese Weise ist sichergestellt, dass zumindest der diagonale Kanalabschnitt frei von Verunreinigungen bleibt. Im diagonalen Kanalabschnitt befindet sich daher auch eine Ablauföffnung zum Übertritt von Wasser in die Ablaufwanne. Bei einem steigenden Flüssigkeitsspiegel außerhalb der Rückhaltevorrichtung steigt auch jede auf der Oberfläche eventuell befindliche Verunreinigung an der Sperre hoch und kann dabei spätestens ab Erreichen eines Niveaus oberhalb des horizontal ausgerichteten Kanalabschnitts nicht mehr in den Kanal eintreten. Bei weiterem Wasserzufluss über den Sammler wird der Kanal, also der diagonale und der anschließende horizontale Kanalabschnitt, weiterhin gespült. Wenn der Wasserspiegel außerhalb der Rückhaltevorrichtung noch weiter ansteigt, kann das Wasser über die im diagonalen Kanalabschnitt befindliche Ablauföffnung abfließen, während jegliche Verunreinigung außerhalb der Rückhaltevorrichtung bleibt. Wenn der Wasserspiegel wieder unter das Niveau der Ablauföffnung fällt, fließt kein Wasser mehr aus der Rückhaltevorrichtung ab. Wenn der Wasserspiegel auf das Niveau des horizontalen Kanalabschnitts fällt, ist grundsätzlich ein Eintritt von Verunreinigungen in den horizontalen Kanalabschnitt möglich. Dieser liegt aber unterhalb der Ablauföffnung im diagonalen Kanalabschnitt, so dass diese Verunreinigungen nicht in die Ablaufwanne gelangen können. Wenn es zu einem erneuten Anstieg des Wasserspiegels kommt, wird aufgrund des dann auch über den Sammler zuströmenden Regenwassers der Kanal mit seinem diagonalen und horizontalen Abschnitt gespült, so dass eventuell eingetretene Verunreinigungen wieder ausgewaschen werden, bevor der Wasserspiegel erneut das Niveau der Ablauföffnung im diagonalen Kanalabschnitt erreicht.

Eine Aufgabe der vorliegenden Erfindung besteht ausgehend von dem Stand der Technik in der EP 2 335 794 A, die - wie oben skizziert - auch bei einem zunächst hohen Wasserspiegel, einem dann sinkenden Wasserspiegel und einem später wieder ansteigenden Wasserspiegel sicher einen Austritt von Verunreinigungen in Form von Öl oder dergleichen aus der Rückhaltevorrichtung vermeidet, darin, eine alternative Ausführungsform einer solchen Rückhaltevorrichtung anzugeben, die sich durch eine kompakte Bauform und/oder eine erleichterte Herstellbarkeit auszeichnet.

Diese Aufgabe wird erfindungsgemäß mit einer Rückhaltevorrichtung der eingangs genannten Art mit den Merkmalen des Anspruchs 1 gelöst. Dazu ist bei einer Rückhaltevorrichtung mit einem als Regenfang fungierenden Sammler und einem daran anschließenden Sammlerablauf, mit einer unter dem Sammler gebildeten Ablaufwanne mit einer Ablauföffnung oder einem unter dem Sammler gebildeten Ablaufabschnitt anstelle der Ablaufwanne sowie mit einem von der Ablauföffnung abgewandten und neben der Ablaufwanne/dem Ablaufabschnitt gebildeten kapillaren Kanal mit einem Kanalzulauf im Inneren der Rückhaltevorrichtung vorgesehen, dass der Sammlerablauf ohne Kontakt zur Ablaufwanne/zum Ablaufabschnitt oberhalb einer inneren Seitenwand der Ablaufwanne/des Ablaufabschnitts liegt und dass der Kanalzulauf seitlich versetzt unterhalb einer Ebene mit dem Sammlerablauf liegt.

Für eine bessere Lesbarkeit der Beschreibung wird diese im Folgenden anhand einer Rückhaltevorrichtung mit einer Ablaufwanne unterhalb des Sammlers fortgesetzt. Die Bezeichnung als Ablaufwanne impliziert jedoch nicht notwendig eine wannenartige Struktur mit einem allseitig umlaufenden Rand. Deshalb wurde oben der Begriff Ablaufabschnitt gewählt, der keinen derartigen allseitig umlaufenden Rand voraussetzt. Für die weitere Beschreibung soll gelten, dass die Verwendung des Begriffs Ablaufwanne keine Beschränkung im Hinblick auf eine in jeder Hinsicht wannenartige Struktur bedeutet.

Mit der Rückhaltevorrichtung gelingt eine Verhinderung eines Abflusses (Rückhalt) einer ersten Flüssigkeit, z. B. Öl, die sich aufgrund eines im Vergleich zu einer zweiten Flüssigkeit geringeren spezifischen Gewichts auf dieser absetzt oder mit dieser in Emulsion vorliegt. Darüber hinaus ist, wenn die beiden Flüssigkeiten nicht vermischt sind, mit der Rückhaltevorrichtung auch eine solche erste Flüssigkeit von einer zweiten Flüssigkeit abscheidbar. Die erste Flüssigkeit ist bevorzugt eine Leichtflüssigkeit, z. B. Öl, insbesondere Esteröl, Leichtöl, Benzin, Dieselkraftstoff, Benzol oder dergleichen, und die zweite Flüssigkeit ist z. B. Wasser oder ähnliches. Die Beschreibung wird zur besseren Verständlichkeit, aber ohne Verzicht auf einen weitergehenden Bedeutungsumfang, für Öl als erste Flüssigkeit und Wasser als zweite Flüssigkeit fortgesetzt.

Die Rückhaltevorrichtung ist zur Platzierung in einer als Auffangbehälter fungierenden äußeren Wanne bestimmt und kann mit einer solchen Wanne kombiniert sein. Wenn die Wanne nach oben offen ist, kann diese in einfacher Art und Weise unter einer Vorrichtung oder einem Aggregat, welche bzw. welches die erste Flüssigkeit abgibt, also z. B. einem Motor oder dergleichen, der Öl, Benzin oder Dieselkraftstoff als Tropfmenge abgibt, positioniert werden, so dass die erste Flüssigkeit in den Auffangbehälter abläuft oder tropft. Wenn die Rückhaltevorrichtung zum Abscheiden einer ersten Flüssigkeit von einer zweiten Flüssigkeit verwendet wird, rechtfertigt sich auch eine Bezeichnung als Abscheidevorrichtung. Die Beschreibung wird - ohne Verzicht auf eine weitergehende Allgemeingültigkeit - allerdings mit der Bezeichnung der Vorrichtung als Rückhaltevorrichtung fortgesetzt.

Der kapillare Kanal der Rückhaltevorrichtung wird zum Beispiel zwischen zwei parallelen Flächen der Rückhaltevorrichtung gebildet und eine Weite des Kanals, also zum Beispiel ein Abstand der den Kanal bildenden Flächen/Bleche, ist so gewählt, das der Kanal eine kapillare Wirkung entfaltet. Die kapillare Wirkung besteht beim Einsatz der Rückhaltevorrichtung speziell darin, dass in die Rückhaltevorrichtung eintretendes Regenwasser, das in den Bereich des Kanalzulaufs gelangt, aufgrund der Kapillarwirkung selbständig in den Kanal eindringt. Innerhalb des Kanals wirkt das so eingedrungene Regenwasser wie ein Vorhang, der den Kanal verschließt. Ein aufgrund von zuströmendem Regenwasser außerhalb der Rückhaltevorrichtung steigender Wasserspiegel, an dessen Oberfläche sich gegebenenfalls Verunreinigungen in Form von Öl und dergleichen befinden können, kann zwar das Niveau des Kanals erreichen, aber aufgrund des durch die Kapillarwirkung bereits mit Regenwasser gefüllten Kanals nicht in diesen eintreten. Bei einem aufgrund von Regenfall steigenden Wasserspiegel außerhalb der Rückhaltevorrichtung wird Regenwasser auch vom Sammler aufgefangen und in das Innere der Rückhaltevorrichtung und damit zum Kanalzulauf geleitet. Damit ergibt sich ein Gegendruck zum Ausgleich des durch das außerhalb der Rückhaltevorrichtung anstehende Wasser ausgeübten Drucks. Bei weiter steigendem Wasserspiegel außerhalb der Rückhaltevorrichtung steigt jede sich gegebenenfalls auf der Oberfläche des dortigen Wasserspiegels befindliche Verunreinigung über das Niveau des Kanals, so dass damit gewährleistet ist, dass keine Verunreinigungen in den Kanal eintreten können. In den Kanal eintretendes Wasser stammt stets aus der Phase unterhalb der gegebenenfalls verunreinigten Wasseroberfläche und kann damit aus der Rückhaltevorrichtung ausgeleitet werden.

Der Vorteil der Erfindung besteht darin, dass die Rückhaltevorrichtung räumlich kompakt und einfach herzustellen ist. Die räumliche Kompaktheit ergibt sich zum Beispiel dadurch, dass als Kanal nur noch der von der Ablauföffnung abgewandte und neben der Ablaufwanne gebildete Kanal erforderlich ist und damit der bei der EP 2 335 794 A noch erforderliche diagonal abwärts gewandte Kanalabschnitt komplett entfällt. Dadurch ist ein geringerer Abstand des Sammlers zum Bodenniveau der Rückhaltevorrichtung möglich, so dass sich insgesamt eine verringerte Höhe der Rückhaltevorrichtung ergibt. Einfach herzustellen ist die Rückhaltevorrichtung, weil diese aus wenigen, geometrisch einfach gestalteten Elementen aufgebaut ist.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin. Sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Die mit der Anmeldung eingereichten Ansprüche sind Formulierungsvorschläge ohne Präjudiz für die Erzielung weitergehenden Schutzes. Da speziell die Gegenstände der Unteransprüche im Hinblick auf den Stand der Technik am Prioritätstag eigene und unabhängige Erfindungen bilden können, behält die Anmelderin sich vor, diese oder noch weitere, bisher nur in der Beschreibung und/oder Zeichnung offenbarte Merkmalskombinationen zum Gegenstand unabhängiger Ansprüche oder Teilungserklärungen zu machen. Sie können weiterhin auch selbständige Erfindungen enthalten, die eine von den Gegenständen der vorhergehenden Unteransprüche unabhängige Gestaltung aufweisen.

Bei der Ausführungsform der Rückhaltevorrichtung weist diese einen horizontal ausgerichteten Sammler und eine vertikale Sperre auf, wobei die Sperre einstückig in eine horizontal ausgerichtete, obere Begrenzungsfläche des Kanals ausläuft. Ein horizontal oder zumindest im Wesentlichen horizontal ausgerichteter Sammler ermöglicht eine reduzierte Höhe der Rückhaltevorrichtung, denn bei einem diagonal angeordneten Sammler bestimmt der höchste Punkt des Sammlers auch die Höhe der Rückhaltevorrichtung. Eine Sperre, die einstückig in eine Begrenzungsfläche des Kanals ausläuft, ist ein einzelnes Bauteil, das im Folgenden auch als Sperrenbauteil bezeichnet wird. Dieses einzelne Bauteil erfüllt sowohl die Funktion als Sperre, also als Abgrenzung des Inneren der Rückhaltevorrichtung gegen einen äußeren Auffangbehälter in Form einer Wanne oder dergleichen, in der die Rückhaltevorrichtung platziert ist, und dort befindliches Wasser oder ein Wasser-Öl-Gemisch, sowie die Funktion als Begrenzungsfläche des Kanals. Damit ist die Anzahl der benötigten Bauteile reduziert. Wenn der als Sperre fungierende Abschnitt des Sperrenbauteils vertikal und der als Begrenzungsfläche fungierende Abschnitt des Sperrenbauteils horizontal orientiert sind, ergibt sich für das Sperrenbauteil eine einfache L-Form mit der Sperre als erstem Schenkel und der oberen Begrenzungsfläche des Kanals als zweitem Schenkel. Mit einer solchen einfachen Form kann das Sperrenbauteil ohne besonderen Aufwand gefertigt und in die erforderliche Position und Orientierung gebracht werden.

Bei einer weiteren Ausführungsform der Rückhaltevorrichtung ist vorgesehen, dass eine zum Innenraum der Rückhaltevorrichtung gewandte Oberfläche des Sperrenbauteils als Leitfläche für über den Sammlerablauf zuströmendes Wasser fungiert und sich am Ende der Leitfläche der Kanalzulauf und im Anschluss an den Kanalzulauf eine Übertrittsmöglichkeit für Wasser in die Ablaufwanne befinden. Indem die Innenoberfläche des Sperrenbauteils als Leitfläche für zuströmendes Wasser fungiert und sich der Kanalzulauf am Ende der Leitfläche befindet, ist gewährleistet, dass der kapillare Kanal sobald wie möglich, also auch schon bei geringen Regenmengen, mit Regenwasser gefüllt ist und damit ein Eintritt von Verschmutzungen ins Innere der Rückhaltevorrichtung verhindert ist. Indem sich die Übertrittsmöglichkeit für Wasser in die Ablaufwanne im Anschluss an den Kanalzulauf befindet, kann überschüssiges Regenwasser, also Regenwasser, das nicht aufgrund des Kapillareffekts in den Kanal gezogen wird, unmittelbar in die von der Rückhaltevorrichtung umfasste Ablaufwanne übertreten und von dort aus der Rückhaltevorrichtung ablaufen oder ausgeleitet werden.

Das bereits erwähnte Sperrenbauteil ist ein Beispiel für eine Vorrichtung/ein Mittel zum Erzeugen einer bevorzugten Strömungsrichtung von über den Sammlerablauf in die Rückhaltevorrichtung zuströmendem Wasser in Richtung auf die Ablauföffnung. Eine Ausführungsform der Rückhaltevorrichtung zeichnet sich dabei dadurch aus, dass in Strömungsrichtung des über den Sammlerablauf zuströmenden Wassers zwischen dem Sammlerablauf und der Ablauföffnung nur eine Seitenwand der Ablaufwanne, insbesondere eine den Kanalzulauf begrenzende Seitenwand, liegt. Der Kanalzulauf liegt dabei nicht in Strömungsrichtung, sondern quer zur Strömungsrichtung vom Sammlerablauf zur Ablauföffnung. Dies ist ein weiterer Unterschied zu der Rückhaltevorrichtung in der EP 2 335 794 A, bei der sich eine bevorzugte Strömungsrichtung von einem dort als Zulauf bezeichneten Sammlerablauf durch den diagonal abwärts gewandten Kanalabschnitt und den daran anschließenden horizontalen Kanalabschnitt einstellt. Erst wenn aufgrund eines entsprechenden Wasserstands die Höhe der in dem diagonal abwärts gewandten Kanalabschnitt gebildeten Ablauföffnung erreicht ist, findet kein Durchströmen des Kanals mit seinen beiden Kanalabschnitten mehr statt und in die Rückhaltevorrichtung eintretendes Regenwasser kann direkt über die Ablauföffnung in Richtung auf den Ablauf abfließen, genauso wie von außerhalb der Rückhaltevorrichtung in den Kanal mit seinen beiden Kanalabschnitten eintretendes Regenwasser auf diesem Wege abfließen kann. In Bezug auf in die Rückhaltevorrichtung der EP 2 335 794 A einströmendes Regenwasser liegt aber der dortige Kanalzulauf, der mit dem Sammlerablauf zusammenfällt, stets in Strömungsrichtung.

Eine besondere Ausführungsform der Rückhaltevorrichtung zeichnet sich dadurch aus, dass eine den Kanalzulauf begrenzende Seitenwand der Ablaufwanne über den die obere Begrenzungsfläche des Kanals bildenden Abschnitt des Sperrenbauteils hinausreicht. Dann ist zum einen gewährleistet, dass in die Rückhaltevorrichtung über den Sammlerablauf einströmendes Regenwasser nicht unmittelbar wieder über die Ablauföffnung aus der Rückhaltevorrichtung austritt. Zum anderen ist auch gewährleistet, dass sich oberhalb des Kanalzulaufs eine gewisse Wassermenge zumindest kurzzeitig halten kann und entweder über den Kanal abfließt und diesen damit spült oder einen Gegendruck gegen außen an der Rückhaltevorrichtung anstehendes Wasser mit eventuellen Verunreinigungen aufbaut.

Die weitere Ausführungsform der Rückhaltevorrichtung weist eine horizontal ausgerichtete untere Begrenzungsfläche des Kanals auf, die einstückig in eine schräge Schwelle ausläuft. Auch hier besteht der Vorteil darin, dass ein einzelnes Bauteil zwei Funktionen erfüllt und einerseits als Begrenzungsfläche des Kanals und andererseits als Schwelle fungiert. Die schräge Schwelle bewirkt, dass dort auftreffendes Regenwasser in Form von Regentropfen von der Rückhaltevorrichtung und speziell dem am oberen Ende der Schräge mündenden Kanal abgelenkt wird. Damit wird verhindert, dass auftreffende Regentropfen verunreinigtes Wasser in den Kanal lenken. Eine Alternative zu einer in einer Schräge auslaufenden unteren Begrenzungsfläche des Kanals besteht darin, dass das die untere Begrenzungsfläche des Kanals bildende Bauteil am Ende des Kanals rechtwinklig abgekantet ist und sich somit eine vertikale Schwelle ergibt, bei der auf einer Wasseroberfläche unterhalb einer Oberkante der Schwelle auftreffende Regentropfen ebenfalls kein verunreinigtes Wasser in den Kanal lenken können. Darüber hinaus kann die Schwelle auch stückweise schräg und stückweise vertikal ausgeführt sein, zum Beispiel mit einem schrägen Abschnitt unmittelbar im Anschluss an den Kanal und einem vertikalen Abschnitt im Anschluss an den schrägen Abschnitt. Diese Ausführungsvariante kombiniert die oben skizzierten Effekte.

Wenn bei der Rückhaltevorrichtung ein Bodenniveau der Ablaufwanne unterhalb eines Niveaus des in der Rückhaltevorrichtung gebildeten Kanals liegt, ist gewährleistet, dass in der Rückhaltevorrichtung normalerweise kein Wasser steht, wenn eine Unterkante einer an die Ablaufwanne angeschlossenen oder angeformten Ablauföffnung mit dem Bodenniveau der Ablaufwanne fluchtet oder im Wesentlichen fluchtet. Wenn gewährleistet ist, dass in der Rückhaltevorrichtung normalerweise kein Wasser steht, kann es dort auch nicht zu Algenbildung oder dergleichen kommen. Eine solche Algenbildung ist selbstverständlich unerwünscht, weil sich zum einen eine Geruchsbelästigung ergeben kann und weil zum anderen gelöste Algen stromabwärts der Rückhaltevorrichtung befindliche Leitungen und Absperrvorrichtungen verschmutzen können.

Wenn eine Hinterkante der Ablaufwanne in Relation zu einer Hinterkante des Sammlers der Rückhaltevorrichtung nach innen zurückversetzt ist, besteht eine einfache Möglichkeit, an eine die Hinterkante der Ablaufwanne bildende Seitenwand einen als Ablauföffnung fungierenden Stutzen anzuformen, zum Beispiel durch Schweißen. Dabei entstehende Schweißnähte oder dergleichen bilden bekanntlich eine Materialanhäufung, hier also eine Materialanhäufung zumindest teilweise auch auf der Oberfläche der Seitenwand der Ablaufwanne. Ein auf diese Weise angebrachter Stutzen muss auch zur Außenseite einer die Rückhaltevorrichtung aufnehmenden Wanne geführt werden. Dafür weist die Wanne in einer Seitenwand eine entsprechende Bohrung oder Öffnung auf. Wegen der Materialanhäufung um den Stutzen an dessen Verbindungsstelle mit der Rückhaltevorrichtung kann der Stutzen demnach nicht mehr so weit durch eine solche Bohrung / Öffnung geführt werden, bis die Seitenwand der Ablaufwanne der Rückhaltevorrichtung plan an der Innenwand der umgebenden Wanne anliegt. Es entstünde mithin ein zumindest optisch unschöner Spalt zwischen Rückhaltevorrichtung und der äußeren Wanne. Dieser Spalt wird vermieden, indem die Hinterkante der Ablaufwanne in Relation zu einer Hinterkante des Sammlers nach innen zurückversetzt ist und hier somit Platz für Materialanhäufungen verbleibt, wie sie in Form einer Schweißnaht entstehen. Die Rückhaltevorrichtung kann damit in der umgebenden Wanne stets und unabhängig von eventuellen Schweißnähten oder dergleichen auf der Rückseite der Rückhaltevorrichtung mit der Hinterkante des Sammlers plan an die Innenwand der umgebenden Wanne geschoben werden.

Eine besondere Ausführungsform der Rückhaltevorrichtung zeichnet sich durch zwei als seitliche Begrenzung fungierende Seitenwangen aus, in denen Schlitze zur formschlüssigen Aufnahme des Sammlers und/oder eines Sperrenbauteils gebildet sind und deren Außenkontur zum formschlüssigen Anlegen der Ablaufwanne und/oder eines Schwellenbauteils ausgebildet ist. Mit solchen Seitenwangen lässt sich die Rückhaltevorrichtung besonders schnell und effizient sowie unter Beachtung der notwendigen Exaktheit herstellen. Die Schlitze in den Seitenwangen wie auch die Außenkontur der Seitenwangen können zum Beispiel mit einem Laser oder mit einem entsprechenden formgebenden Verfahren hergestellt werden. Die Schlitze sind in ihrer Breite auf die Materialstärken der restlichen zur Herstellung der Rückhaltevorrichtung erforderlichen Bauteile, insbesondere Bleche, abgestellt. Ein Sperrenbauteil kann demnach formschlüssig oder zumindest im Wesentlichen formschlüssig in einen zur Aufnahme eines seitlichen Endes des Sperrenbauteils in der Seitenwange gebildeten Schlitz eingeführt werden und befindet sich damit bereits in einer vorläufig justierten Position. Gleiches gilt sinngemäß für andere in den Seitenwangen gebildete Schlitze und dort positionierbare Bauteile der Rückhaltevorrichtung, zum Beispiel das als Sammler fungierende Blech, das als Ablaufwanne fungierende Blech, und so weiter. Bauteile der Rückhaltevorrichtung, die nicht oder nicht ausschließlich in solchen Schlitzen angebracht werden können, werden an die Außenkontur der Seitenwangen angelegt, die dazu zum formschlüssigen Anlegen der Ablaufwanne und/oder des Schwellenbauteils ausgebildet sind. Beim Herstellen der Rückhaltevorrichtung kann diese also durch Einstecken einzelner Bauteile in die in den Wangen gebildeten Schlitze und durch Anlegen weiterer Bauteile an die Außenkontur der Wangen bereits roh zusammengesetzt werden. Dann lassen sich die Bauteile in den Schlitzen und entlang der Außenkontur der Seitenwangen mit Schweißpunkten oder dergleichen besonders leicht und unkompliziert fixieren. In einer solchen Konfiguration kann anschließend durch fortlaufende Schweißnähte entlang der Stoßstellen zwischen der Seitenwange und den mit der Seitenwange kombinierten Bauteilen eine ausreichende wasserdichte Verbindung geschaffen werden.

Wenn mit einer oder beiden Seitenwangen jeweils einstückig ein Abdeckteil verbunden ist, das auf eine Außenfläche der jeweiligen Seitenwange klappbar ist und im gebrauchsfähigen Zustand der Rückhaltevorrichtung auf die Seitenwange geklappt ist, ist eine einfache Möglichkeit gegeben, Schweißnähte oder dergleichen, wie sie beim Verbinden von Bauteilen der oben genannten Art mit der Seitenwange entstehen, zu verdecken. Dies verhilft der Rückhaltevorrichtung zu einer optisch ansprechenden Anmutung und verbirgt den inneren Aufbau der Rückhaltevorrichtung, weil von dieser dann seitlich nur noch die Abdeckteile und die zwischen den Seitenwangen verlaufenden Seitenabschnitte sowie von oben nur noch der Sammler sichtbar sind bzw. ist. Als Abdeckteil kommt ein zur Seitenwange spiegelsymmetrisches Teil in Betracht, das mit der jeweiligen Seitenwange durch einen oder mehrere Stege verbunden ist. Eine solche einstückige Verbindung über Stege lässt sich leicht herstellen, indem mit einem Laser ein oder mehrere Schlitze in ein Blechteil, dessen eine Hälfte die Seitenwange und dessen andere Hälfte das Abdeckteil bildet, eingebracht werden und zwischen je zwei benachbarten Schlitzen ein Steg stehen bleibt. Beim Umklappen des Abdeckteils auf die Fläche der Seitenwange ergibt sich eine Biegeverformung der Stege. Das Abdeckteil kann an den Rändern mit der jeweiligen Seitenwange verschweißt werden. Das Abdeckteil muss nicht exakt spiegelsymmetrisch sein und kann auch eine Kontur aufweisen, die einer Hüllkontur der abzudeckenden Seitenwange inklusive angelegter Bauteile entspricht. Letzteres bedeutet, dass bei einer Seitenwange mit konvexen Randabschnitten das Abdeckteil an dieser Stelle mit einer geraden Kante abschließt und/oder dass das Abdeckteil auch die Materialstärke von an der Kante der Seitenwange angelegten Bauteilen abdeckt.

Der Vorteil der Erfindung und ihrer Ausgestaltungen besteht damit insbesondere darin, dass eine Bauhöhe der Rückhaltevorrichtung deutlich reduziert werden kann, so dass damit die in einer die Rückhaltevorrichtung aufnehmenden Wanne verbleibende Flüssigkeitsmenge reduziert werden kann. Diese reduzierte Flüssigkeitsmenge reduziert die Gefahr von Algenbildung oder dergleichen in der äußeren Wanne und erleichtert deren Reinigung.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Das oder jedes Ausführungsbeispiel ist nicht als Einschränkung der Erfindung zu verstehen. Vielmehr sind im Rahmen der vorliegenden Offenbarung auch Abänderungen und Modifikationen möglich, insbesondere solche Varianten, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen, auch soweit sie zum Beispiel Herstellverfahren betreffen.

Es zeigen
- FIG 1: eine Ausführungsform einer erfindungsgemäßen Rückhaltevorrichtung,
- FIG 2: die Rückhaltevorrichtung gemäß FIG 1 in einer äußeren Wanne sowie
- FIG 3: und
- FIG 4: alternative Ausführungsformen einer erfindungsgemäßen Rückhaltevorrichtung.

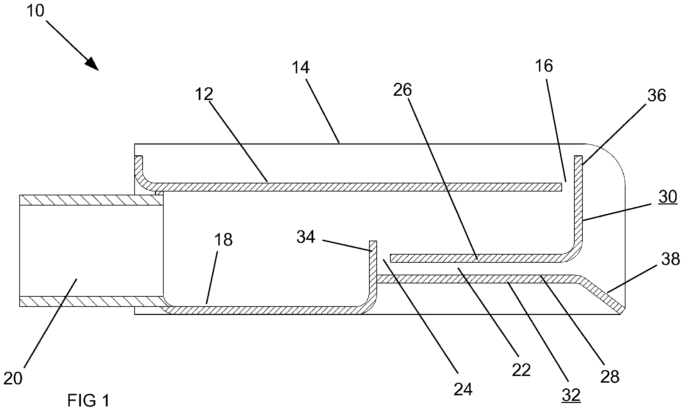

FIG 1 zeigt einen vertikalen Schnitt durch eine Ausführungsform einer erfindungsgemäßen Rückhaltevorrichtung 10. Diese umfasst einen als Regenfang fungierenden Sammler 12. Der Sammler 12 ist mit einer horizontal ausgerichteten Grundfläche gezeigt. Der Sammler 12 wirkt für auftreffendes Regenwasser wie eine Wanne und ein den Sammler 12 bildendes Bauteil, insbesondere Blechbauteil, ist dafür an einer Außenseite mit einer aufwärts gerichteten Kante versehen. Die restlichen Begrenzungsflächen des Sammlers 12 werden durch die Innenseiten zweier auf beiden Seiten an die Rückhaltevorrichtung 10 angrenzenden Seitenwangen 14 gebildet, von denen in der Schnittdarstellung nur die in Betrachtungsrichtung rückwärtige Seitenwange 14 erkennbar ist. An einer in der Darstellung auf der rechten Seite gezeigten Frontseite der Rückhaltevorrichtung 10 befindet sich ein im Folgenden als Sammlerablauf 16 bezeichneter Ablauf aus dem Sammler 12, so dass auf diesem Wege vom Sammler 12 aufgefangenes Regenwasser in das Innere der Rückhaltevorrichtung 10 eintreten kann.

Unterhalb des Sammlers 12 befindet sich ein hier und im Folgenden als Ablaufwanne 18 bezeichneter Ablaufabschnitt mit einer Ablauföffnung 20. Die Ablaufwanne 18/der Ablaufabschnitt reicht mit seinem Bodenniveau bis zur Unterkante der Rückhaltevorrichtung 10. Indem eine Unterkante der Ablauföffnung 20 mit dem Bodenniveau der Ablaufwanne 18 fluchtet oder zumindest im Wesentlichen fluchtet ist gewährleistet, dass in der Ablaufwanne 18 normalerweise kein Wasser steht und sämtliches Wasser vielmehr aus der Rückhaltevorrichtung 10 abfließt oder abfließen kann.

Neben der Ablaufwanne 18 und von der Ablauföffnung 20 abgewandt weist die Rückhaltevorrichtung 10 einen kapillaren Kanal 22 mit einem Kanalzulauf 24 auf. Der Kanalzulauf 24 befindet sich damit ersichtlich im Inneren der Rückhaltevorrichtung 10. Der kapillare Kanal 22 wird hier von zwei parallelen Flächen 26, 28 eingeschlossen und die Kapillarität des Kanals 22 ergibt sich aufgrund eines geeigneten, also geringen Abstands zwischen den beiden den Kanal 22 bildenden Flächen 26, 28. Bei den den Kanal 22 bildenden Flächen 26, 28 handelt es sich bei der dargestellten Ausführungsform um die Unterseite eines Sperrenbauteils 30 sowie die Oberseite eines Schwellenbauteils 32.

Der Sammlerablauf 16 befindet sich ohne einen Kontakt zur Ablaufwanne 18 oberhalb einer Seitenwand 34 der Ablaufwanne 18 und der Kanalzulauf 24 liegt seitlich versetzt unterhalb einer Ebene mit dem Sammlerablauf 16. Dies sind wesentliche Unterschiede zu der Rückhaltevorrichtung in der EP 2 335 794 A. Dort geht der Sammler in eine Wand eines diagonal abwärts gerichteten Kanalabschnitts über. In dieser Wand befindet sich eine Ablauföffnung, so dass der Bereich hinter dieser Wand als Ablaufabschnitt und die Wand selbst entsprechend als Seitenwand eines solchen Ablaufabschnitts aufgefasst werden kann. Der dortige Sammlerablauf befindet sich allerdings nicht oberhalb dieser Seitenwand, sondern auf gleicher Höhe wie eine Oberkante der Seitenwand. Zudem steht der Sammlerablauf bei der bekannten Rückhaltevorrichtung in Kontakt mit der dortigen Ablaufwanne, denn der Sammler geht einstückig in die Seitenwand der Ablaufwanne über. Weil bei der bekannten Rückhaltevorrichtung der dortige Kanal zweiteilig mit einem ersten diagonal abwärts gewandten Kanalabschnitt und einem zweiten, daran anschließenden und horizontal orientierten Kanalabschnitt ausgeführt ist, befindet sich der Kanalzulauf am Beginn des diagonal abwärts gewandten ersten Kanalabschnitts. Damit fallen bei der bekannten Rückhaltevorrichtung Sammlerablauf und Kanalzulauf zusammen und entsprechend liegt keine Situation vor, wie sie bei der hier neu vorgeschlagenen Rückhaltevorrichtung 10 gegeben ist, bei der der Kanalzulauf 24 seitlich versetzt unterhalb einer Ebene mit dem Sammlerablauf 16 und im Inneren der Rückhaltevorrichtung 10 liegt.

Die in den Figuren gezeigte konkrete Ausführungsform der hier vorgeschlagenen Rückhaltevorrichtung 10 zeichnet sich durch einen horizontal ausgerichteten Sammler 12 und eine vertikale Sperre 36 aus, wobei die Sperre 36 einstückig in eine horizontal ausgerichtete, obere Begrenzungsfläche 26 des Kanals 22 ausläuft. Die Sperre 36 ist damit ein Schenkel eines L-förmigen Sperrenbauteils 30 und der andere Schenkel des Sperrenbauteils 30 bildet mit seiner Unterseite die obere Begrenzungsfläche 26 des Kanals 22.

Die Sperre 36 begrenzt auch den Sammlerablauf 16 und der Sammlerablauf 16 ist bei der gezeigten Ausführungsform dadurch gebildet, dass das den Sammler 12 bildende Bauteil nicht ganz bis an die hier vertikal orientiert gezeigte Sperre 36 heranreicht. Der zwischen Sammler 12 und Sperre 36 verbleibende Spalt bildet also den Sammlerablauf 16. Über den Sammlerablauf 16 kann vom Sammler 12 aufgefangenes Regenwasser in das Innere der Rückhaltevorrichtung 10 einströmen.

Für in das Innere der Rückhaltevorrichtung 10 einströmendes Regenwasser fungiert eine zum Innenraum der Rückhaltevorrichtung 10 gewandte Oberfläche des Sperrenbauteils 30 als Leitfläche. Am Ende dieser Leitfläche befindet sich der Kanalzulauf 24, so dass einströmendes Regenwasser über die Leitfläche bis zum Kanalzulauf 24 und von dort aufgrund der Kapillarität des Kanals 22 in den Kanal 22 gelangt. Im Anschluss an den Kanalzulauf 24 besteht für einströmendes Regenwasser eine Übertrittsmöglichkeit in die Ablaufwanne 18, so dass überschüssiges Wasser über die Ablauföffnung 20 aus der Ablaufwanne 18 und damit insgesamt aus der Rückhaltevorrichtung 10 abfließen kann. Das Sperrenbauteil 30 ist damit ein Beispiel für ein Mittel oder eine Vorrichtung zum Erzeugen einer bevorzugten Strömungsrichtung von über den Sammlerablauf 16 einströmendem Regenwasser in Richtung auf die Ablauföffnung 20.

Die genannte Übertrittsmöglichkeit ist bei dem dargestellten Ausführungsbeispiel in Form der Seitenwand 34 der Ablaufwanne 18 gebildet, deren Oberkante entweder bündig mit der Oberseite des horizontalen Schenkels des Sperrenbauteils 30 abschließen oder - wie hier gezeigt - leicht über das Niveau dieser Oberseite hinausragen kann. Aufgrund der Kapillarität des Kanals 22 ist auch bei einer bündig mit der Oberseite des horizontalen Schenkels des Sperrenbauteils 30 abschließenden Seitenwand 34 gewährleistet, dass zuströmendes Regenwasser zumindest so lange in den Kanal 22 gezogen wird, bis dieser vollflächig mit Regenwasser gefüllt ist. Bei einer demgegenüber nach oben verlängerten Seitenwand 34 fungiert der über die Oberseite des horizontalen Schenkels des Sperrenbauteils 30 hinausragende Abschnitt der Seitenwand zumindest teilweise als Sperre für zuströmendes Regenwasser, so dass sich dieses zumindest zeitweise oberhalb des Kanalzulaufs 24 sammelt und von dort entweder über den Kanal 22 abfließt oder bei einem entsprechenden Flüssigkeitsstand außerhalb der Rückhaltevorrichtung 10 einen Gegendruck aufbaut und verhindert, dass verunreinigtes Wasser in den Kanal 22 gelangen kann. In Strömungsrichtung von über den Sammlerablauf 16 einströmendem Regenwasser befindet sich damit zwischen dem Sammlerablauf 16 und der Ablauföffnung 20 nur die Seitenwand 34 der Ablaufwanne 18. Der Kanalzulauf 24 liegt quer zu dieser Strömungsrichtung und wird bei der dargestellten Ausführungsform auf einer Seite durch die Seitenwand 34 der Ablaufwanne 18 begrenzt.

Genauso wie die obere Begrenzungsfläche 26 des Kanals 22 durch ein zwei Funktionen erfüllendes Bauteil, nämlich das Sperrenbauteil 30, gebildet ist, ist auch die untere Begrenzungsfläche 28 des Kanals 22 durch ein zwei Funktionen erfüllendes Bauteil gebildet, nämlich das Schwellenbauteil 32. Das Schwellenbauteil 32 umfasst einen ersten, hier horizontal gezeigten und zumindest parallel zum zweiten, langen Schenkel des Sperrenbauteils 30 orientierten Abschnitt sowie einen zweiten, als Schwelle 38 fungierenden und diagonal abwärts geneigten Abschnitt. Das Schwellenbauteil 32 umfasst diese beiden Abschnitte in Form eines einstückigen Bauteils.

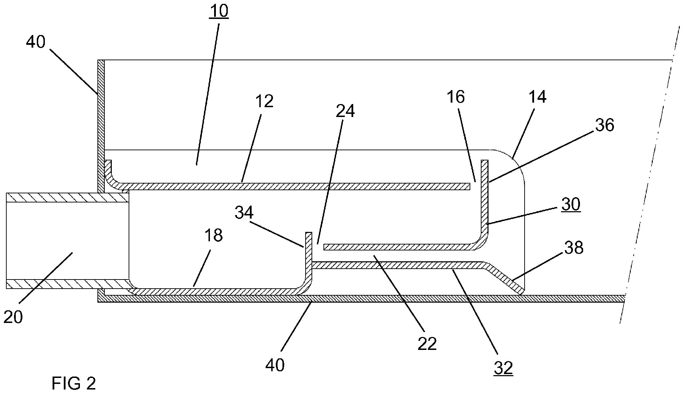

Die Höhe der Schwelle 38 ist dafür wirksam, dass aus einem Motor, einer Klimaanlage oder dergleichen (sämtlich nicht gezeigt) austretendes Öl oder ähnliches in seiner gesamten Menge von einer die Rückhaltevorrichtung 10 aufnehmenden Wanne 40 (siehe FIG 2) aufgefangen werden kann, ohne dass das Niveau des Kanals 22 erreicht wird. Ein Flüssigkeitsspiegel in der Wanne 40 kann damit erst dann das Niveau des Kanals 22 erreichen, wenn Regenwasser in die Wanne 40 gelangt oder wenn Regenwasser zusätzlich zu bereits in der Wanne 40 befindlichem Öl oder dergleichen in die Wanne 40 gelangt. Die Rückhaltewirkung der Rückhaltevorrichtung 10 basiert dabei darauf, dass Regenwasser nicht nur in die Wanne 40, sondern über den Sammler 12 auch in die Rückhaltevorrichtung 10 gelangt. Die Wanne 40 ist in FIG 2 nur teilweise gezeigt, wie die diagonale Schnittlinie auf der rechten Seite der Darstellung andeutet.

Die weitere Beschreibung wird ohne Verzicht auf eine weitergehende Allgemeingültigkeit am Beispiel von Öl als gewässergefährdendem Stoff, der von der Wanne 40 zunächst aufgefangen wird und der mit der Rückhaltevorrichtung 10 in der Wanne 40 zurückgehalten wird, fortgesetzt. Wenn sich gemäß dieser Lesart nur Öl in der Wanne 40 befindet, bleibt der Flüssigkeitsspiegel unterhalb des Niveaus des Kanals 22 der Rückhaltevorrichtung 10. Das Öl kann damit nicht aus der Wanne 40 austreten. Bei zuströmendem Regenwasser steigt der Flüssigkeitsspiegel in der Wanne 40. Gleichzeitig gelangt Regenwasser aber auch in das Innere der Rückhaltevorrichtung 10 und dort zum Kanalzulauf 24, nämlich über die zum Innenraum der Rückhaltevorrichtung 10 gewandte und als Leitfläche fungierende Oberfläche des Sperrenbauteils 30. Aufgrund der Kapillarität des Kanals 22 wird zuströmendes Regenwasser vom Kanalzulauf 24 in den Kanal 22 gezogen, der damit für einen außerhalb der Rückhaltevorrichtung 10 steigenden Flüssigkeitsspiegel zunächst geschlossen ist. Das Schließen des Kanals 22 aufgrund von dessen Kapillarität erfolgt dabei im Vergleich zu einem außerhalb der Rückhaltevorrichtung 10 steigenden Flüssigkeitsspiegel ausreichend schnell, denn bereits geringe Mengen von in die Rückhaltevorrichtung 10 einströmendem Regenwasser reichen für eine vollflächige Benetzung des Kanals 22 aus. Wenn der Flüssigkeitsspiegel außerhalb der Rückhaltevorrichtung 10 aufgrund von andauerndem Regen weiter steigt, erreicht dieser sukzessive ein Niveau oberhalb der Öffnung des Kanals 22 der Rückhaltevorrichtung 10. Dann befindet sich die verunreinigte Oberfläche des Flüssigkeitsspiegels oberhalb des Kanals 22, so dass in den Kanal 22 eintretende Flüssigkeit nur nicht verunreinigtes Regenwasser aus der Wanne 40 ist, das über die Rückhaltevorrichtung 10 und deren Ablauföffnung 20 abfließen kann.

Das Abfließen von Regenwasser aus der Rückhaltevorrichtung 10 - gleich ob es sich um über den Sammlerablauf 16 zugeströmtes Regenwasser oder aufgrund eines entsprechenden Flüssigkeitsspiegels außerhalb der Rückhaltevorrichtung über den Kanal 22 eingetretenes Regenwasser handelt - wird dadurch begünstigt, dass das Bodenniveau der Ablaufwanne 18 unterhalb eines Niveaus des Kanals 22 liegt, so dass normalerweise kein Wasser in der Rückhaltevorrichtung steht und dementsprechend auch eine Algenbildung vermieden ist.

Die mit der hier vorgeschlagenen Rückhaltevorrichtung 10 erreichte kompakte Bauform, speziell die reduzierte Höhe der Rückhaltevorrichtung 10, gewährleistet auch, das die Flüssigkeitsmenge in der umgebenden Wanne 40 im Vergleich zu bisherigen Installationen reduziert ist. Normalerweise wird selbstverständlich davon ausgegangen, dass sich in der Wanne 40 kein Öl oder dergleichen befindet, denn austretendes Öl stellt immer eine Fehler- oder Ausnahmesituation dar. Wenn sich in der Wanne 40 Flüssigkeit befindet, handelt es sich demnach normalerweise um Regenwasser. Bis zum Erreichen des Niveaus des Kanals 22 der Rückhaltevorrichtung 10 kann das Regenwasser nicht über die Rückhaltevorrichtung 10 aus der Wanne 40 abfließen. Ein solcher Abfluss ist erst möglich, wenn der Flüssigkeitsspiegel in der Wanne 40 das Niveau des Kanals 22 überschritten hat. Hier reicht aber bereits eine geringe Überschreitung dieses Niveaus aus, damit ein Abfluss von Regenwasser aus der Wanne 40 über den Kanal 22 und damit die Rückhaltevorrichtung 10 möglich ist. Der damit mögliche minimale Flüssigkeitsspiegel in der Wanne 40 liegt damit aber deutlich unter einem mit der Rückhaltevorrichtung gemäß der EP 2 335 794 A minimal möglichen Flüssigkeitsspiegel, der auf der Höhe der dortigen Ablauföffnung anzusetzen ist. Diese Reduktion des minimal möglichen Flüssigkeitsspiegels in der Wanne 40 trägt dazu bei, dass auch in der Wanne 40 die Möglichkeit zur Algenbildung reduziert ist, denn die bei dem minimal möglichen Flüssigkeitsspiegel in der Wanne 40 verbleibende Flüssigkeit kann zum Beispiel je nach Witterungsbedingungen vergleichsweise schnell verdunsten. Darüber hinaus ist aufgrund des reduzierten minimal möglichen Flüssigkeitsspiegels in der Wanne 40 diese auch leichter und schneller zu reinigen.

Nicht unmittelbar gezeigt in den Figuren ist, dass jede als seitliche Begrenzung der Rückhaltevorrichtung 10 fungierende Seitenwange 14 Schlitze zur formschlüssigen Aufnahme des Sammlers 12 und/oder des Sperrenbauteils 30 aufweist. Allerdings lässt sich eine Position und ein Verlauf solcher Schlitze anhand der Schnittdarstellung in FIG 1 leicht erläutern, denn es müssen nur die geschnittenen Profile von Sammler 12 und Sperrenbauteil 30 als Schlitze in der Seitenwange 14 aufgefasst werden. Bei der gezeigten Schnittdarstellung sind die Schlitze nicht mehr separat erkennbar, denn der Sammler 12 und das Sperrenbauteil 30 sind bereits in die für deren Aufnahme vorgesehenen Schlitze in der Seitenwange 14 eingesetzt. Das Einsetzen dieser Bauteile 12, 30 in die beiden Seitenwangen 14 (nur eine sichtbar in FIG 1) erleichtert das Zusammenbauen der Rückhaltevorrichtung 10 und mit dem Einsetzen dieser Bauteile 12, 30 ist bereits eine erste Vorfixierung erreicht, auf deren Basis die Herstellung der Rückhaltevorrichtung 10 durch Verschweißen oder sonstiges dauerhaftes Verbinden dieser Bauteile 12, 30 mit den Seitenwangen 14 fortgesetzt werden kann. Zum ähnlich leichten und unkomplizierten Anbringen der Ablaufwanne 18 und/oder des Schwellenbauteils 32 ist vorgesehen, dass die Außenkontur der Seitenwangen 14 zum formschlüssigen Anlegen dieser Bauteile 18, 32 ausgebildet ist. Die Seitenwangen 14 mit dem oder den in die dortigen Schlitze eingeführten Bauteil(en) 12, 30 können also auf das oder jedes formschlüssig anlegbare Bauteil 18, 32 gesetzt werden, damit alle Bauteile 12, 18, 30, 32 mit den Seitenwangen 14 zum Beispiel durch Verschweißen verbunden werden können. Eine bevorzugte Variante besteht dabei darin, dass die Seitenwangen 14 mit dem oder den in die dortigen Schlitze eingeführten Bauteil(en) 12, 30 im Vergleich zu der in FIG 1 dargestellten Orientierung um 180° gedreht auf einer Arbeitsfläche platziert werden, so dass das oder jedes formschlüssig an die Seitenwangen 14 anlegbare Bauteil 18, 32 von oben auf die Oberkanten der Seitenwangen 14 gelegt werden kann und sich dort unmittelbar in der endgültigen und zum Fixieren an den Seitenwangen 14 geeigneten Position befindet. Ebenfalls nicht gezeigt in den Figuren ist, dass die Seitenwangen 14 seitlich mit einem Abdeckteil abgedeckt sein können, so dass die beim Verbinden der vorgenannten Bauteile 12, 18, 30, 32 mit den Seitenwangen 14 entstehenden Schweißnähte oder dergleichen verdeckt sind.

Abschließend werden zur weiteren Erläuterung, aber ohne Verzicht auf eine weitergehende Allgemeingültigkeit einzelne Maße der in FIG 1 dargestellten Ausführungsform genannt. Danach beträgt eine Höhe der Schwelle 38 etwa 5 bis 6 mm, die Höhe der Oberkante der Seitenwand 34 etwa 11 bis 12 mm und die Öffnungsweite des Kanals 22, also der Abstand zwischen dessen oberer und unterer Begrenzungsfläche 26, 28, etwa 2,5 mm. Die Materialstärke der verwendeten Bleche beträgt etwa 1,5 mm. Die Dimensionen der äußeren Wanne 40 sind so berechnet, dass sich bei einem vollständigen Auslaufen der/des in oder über der Wanne 40 platzierten Maschine/Aggregats ein Füllstand von ca. 4 mm in der Wanne 40 ergibt. Wenn eine Ölschicht in der Größenordnung von 4 mm bei Regenfall auf dem Regenwasser aufschwimmt, ist aufgrund des auch in die Rückhaltevorrichtung 10 einströmenden Regenwassers auf jeden Fall gewährleistet, dass der Kanal 22 in seiner ganzen Fläche mit Wasser benetzt ist, so dass das aufschwimmende Öl bei Erreichen des Niveaus des Kanals 22 nicht in diesen eindringen kann. Bei einer Höhe des Kanals von 2,5 mm und einer Materialstärke des horizontalen Schenkels des Sperrenbauteils 30 im Bereich von 1,5 mm kann die Ölschicht in der Wanne 40 an einer Unterkante des Kanals 22 anstehen, ohne dass Öl in den Kanal 22 eindringen kann. Wenn der Wasserspiegel in der Wanne 40 weiter steigt und damit auch die Ölschicht an der Sperre 36 emporsteigt, bildet die Kapillarität des Kanals 22 einen Gegendruck, der ein Eindringen von Öl in den Kanal 22 verhindert. Die Größe des aufgebrachten Gegendrucks kann noch erhöht werden, wenn die Seitenwand 34 der Ablaufwanne 18 geringfügig, zum Beispiel um 1,5 mm verlängert wird, so dass sie über das Niveau der Oberfläche des horizontalen Schenkels des Sperrenbauteils 30 hinausragt und damit auf dem horizontalen Schenkel des Sperrenbauteils 30 Wasser wie in einer Wanne stehen kann. Wenn der Wasserspiegel in der äußeren Wanne 40 noch weiter steigt, ergibt sich schließlich eine Situation, bei der die auf dem Regenwasser aufschwimmende Ölschicht vollständig oberhalb des Kanals 22 und damit an dem vertikalen Schenkel des Sperrenbauteils 30 ansteht. Ab einer solchen Konstellation kann das Regenwasser aus der äußeren Wanne 40 unter der Ölschicht durch den Kanal 22 und anschließend über die Auffangwanne 18 und durch die Ablauföffnung 20 abfließen. Wenn auf diese Weise oder durch Verdunstung der Wasserspiegel in der äußeren Wanne 40 wieder sinkt, ergibt sich schließlich eine Situation, bei der der Gegendruck im Kanal 22 ausreicht, um weiteres Eindringen von Flüssigkeit aus der äußeren Wanne 40 zu verhindern.

Das gleiche Szenario wie oben skizziert gilt auch, wenn der Ölaustritt erfolgt, wenn sich bereits Regenwasser in der äußeren Wanne 40 befindet. Auch dann sammelt sich das Öl mit einer maximal 4 mm starken Schicht auf dem Regenwasser und kann selbst bei Erreichen des Niveaus des Kanals 22 nicht in diesen eindringen oder wird bei einem eventuellen Eindringen beim nächsten Regenfall wieder aus dem Kanal 22 gespült.

Die Rückhaltevorrichtung 10 kann mit einer Heizvorrichtung in Form einer Heizpatrone oder einer Heizmatte oder dergleichen ausgestattet werden. Als Position für eine Heizpatrone kommt eine Anbringung parallel zum Stutzen der Ablauföffnung 20 in Betracht. Eine Heizmatte kann sich auf dem Boden der Ablaufwanne 18 und/oder unterhalb des Schwellenbauteils 32 befinden. Als Heizvorrichtung kommt speziell auch der in der DE 20 2012 102 822 U beschriebene Heizeinsatz in Betracht. Dieser kann in den Stutzen der Ablauföffnung 20 geschoben werden. Zur Vermeidung unnötiger Wiederholungen soll hiermit der komplette Offenbarungsgehalt der DE 20 2012 102 822 U als in die hier vorgelegte Beschreibung einbezogen gelten. Kurz gefasst beschreibt die DE 20 2012 102 822 U einen Heizeinsatz für eine Rückhaltevorrichtung, wobei der Heizeinsatz einen ersten und einen zweiten Gehäuseabschnitt aufweist, wobei der Heizeinsatz mit seinem zweiten Gehäuseabschnitt in die Rückhaltevorrichtung einführbar und mit seinem ersten Gehäuseabschnitt an der Rückhaltevorrichtung fixierbar ist, wobei im ersten Gehäuseabschnitt ein in Längsrichtung des Heizeinsatzes verlaufender Ablaufkanal gebildet ist, der an der Frontseite des Heizeinsatzes in einer Ablauföffnung endet, wobei sich zwischen dem ersten und dem zweiten Gehäuseabschnitt Einströmöffnungen zum Ablaufkanal befinden, wobei im zweiten Gehäuseabschnitt eine Platinenkammer zur Aufnahme einer Platine mit einer Versorgungs- und Steuerungsschaltung für den Heizeinsatz gebildet ist, wobei in Längsrichtung durch den Heizeinsatz eine Heizelementbohrung zum Einführen eines Heizelements verläuft, die im zweiten Gehäuseabschnitt zur Platinenkammer offen ist und im ersten Gehäuseabschnitt parallel zum Ablaufkanal und außerhalb des Ablaufkanals verläuft.

Die hier beschriebene Rückhaltevorrichtung 10 kann auch mit einem in den Stutzen der Ablauföffnung 20 eingesetzten oder einem im Anschluss an den Stutzen der Ablauföffnung 20 angebrachten Ventil kombiniert werden, das im Falle eines möglichen Austritts von im Inneren der Rückhaltevorrichtung 10 sensierten Schadstoffen, zum Beispiel Glykol oder dergleichen, aus der Rückhaltevorrichtung 10 die Ablauföffnung 20 verschließt. Als ein derartiges Ventil kommt speziell ein Ventil der in der DE 10 2010 000 840 A beschriebenen Art in Betracht. Zur Vermeidung unnötiger Wiederholungen soll hiermit auch der komplette Offenbarungsgehalt der DE 10 2010 000 840 A als in die hier vorgelegte Beschreibung einbezogen gelten. Kurz gefasst beschreibt die DE 10 2010 000 840 A ein Ventil mit einer Antriebseinheit, einem Kolben und einem Gehäuse, wobei das Gehäuse sowohl die Antriebseinheit wie auch den Kolben aufnimmt. Eine Ausführungsform des Ventils zeichnet sich dadurch aus, dass dieses zumindest eine Einlassöffnung in einem ersten Gehäusedrittel, insbesondere eine Mehrzahl von insbesondere äquidistant über den Außenumfang des Gehäuses verteilte Einlassöffnungen, und mindestens eine Auslassöffnung, insbesondere genau eine axial zentrierte Auslassöffnung, aufweist.

Die hier beschriebene Rückhaltevorrichtung 10 kann auch mit der in der DE 20 2012 103 850 beschriebenen Glykolsensorvorrichtung der Anmelderin der vorliegenden Erfindung oder Weiterentwicklungen dieser Glykolsensorvorrichtung kombiniert werden. Die Weiterentwicklung der Glykolsensorvorrichtung ist in einer parallelen Anmeldung derselben Anmelderin (Titel: Flüssigkeitsrückhaltevorrichtung; internes Aktenzeichen 075P004EP; amtliches Aktenzeichen noch nicht bekannt) ausführlich beschrieben. Zur Vermeidung unnötiger Wiederholungen soll hiermit auch der komplette Offenbarungsgehalt dieser Anmeldung sowie der zugrunde liegenden der DE 20 2012 103 850 als in die hier vorgelegte Beschreibung einbezogen gelten. Kurz gefasst beschreibt diese Anmeldung eine Glykolsensorvorrichtung mit einem Glykolsensor in einem einseitig offenen Gehäuse, wobei der Glykolsensor in dem Gehäuse durch eine wasserundurchlässige, aber dampfdiffusionsoffene Membran von der Gehäuseöffnung zurückgesetzt ist, wobei mit der Glykolsensorvorrichtung im Falle einer Glykolerkennung ein entsprechendes Signal generierbar ist, mit dem ein Ventil der oben genannten Art zur Verriegelung der Ablauföffnung 20 der Rückhaltevorrichtung 10 ansteuerbar ist.

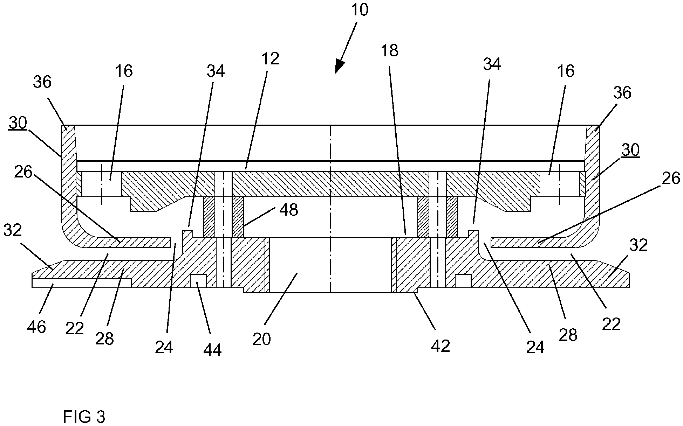

Die Darstellung in FIG 3 zeigt eine besondere Ausführungsform der Rückhaltevorrichtung 10 aus FIG 1. Diese Rückhaltevorrichtung 10 ist eine Weiterentwicklung der Rückhaltevorrichtung 10 aus FIG 1 und im Wesentlichen ein auf Basis des in FIG 1 gezeigten Vertikalschnitts durch die dortige Rückhaltevorrichtung 10 gebildeter Rotationskörper mit einer im Gegensatz zu der horizontalen Ablauföffnung 20 in FIG 1 vertikal nach unten gewandten, mittigen Ablauföffnung 20. Insofern kann hinsichtlich einer Beschreibung der einzelnen Elemente der Rückhaltevorrichtung 10 vollumfänglich auf deren Beschreibung in FIG 1 verwiesen werden. Die Rückhaltevorrichtung 10 in FIG 3 zeichnet sich also durch eine runde Grundkontur und eine Rotationssymmetrie aus. Die Symmetrieachse verläuft durch das Zentrum der Ablauföffnung 20 und ist in dieser Weise in der Darstellung in FIG 3 strichpunktiert eingezeichnet.

Die Rückhaltevorrichtung 10 in FIG 3 kommt, genauso wie dies die Darstellung in FIG 2 für die Rückhaltevorrichtung 10 aus FIG 1 zeigt, für eine Platzierung in einer Auffangwanne 40 (FIG 2) in Betracht. Die Rückhaltevorrichtung 10 in FIG 3 weist dafür eine nach unten gewandte, flache Abstellung 42 auf, welche zum Beispiel eine Justierung in einem im Boden der Auffangwanne 40 gebildeten Abfluss erlaubt. Umlaufend um die Abstellung 42 ist eine Nut 44 für einen O-Ring zur Abdichtung der Rückhaltevorrichtung 10 gegen den Boden der jeweiligen Auffangwanne 40 gezeigt. Seitlich ist eine Ausnehmung 46 für ein selbst nicht dargestelltes Heizelement gezeigt. Mit der Rückhaltevorrichtung 10 können mehrere äquidistant oder zumindest im Wesentlichen äquidistant entlang der Umfangslinie der Rückhaltevorrichtung 10 verteilte Heizelemente vorgesehen sein, zum Beispiel drei um jeweils 120° versetzt angeordnete Heizelemente. Das oder jedes Heizelement erwärmt das Schwellenbauteil 32 und sorgt damit dafür, dass der Kanal 22 auch bei Frost offen ist. Durch Konvektion innerhalb des Materials des Schwellenbauteils 32 verteilt sich die mittels einzelner versetzt angeordneter Heizelemente abgegebene Wärme. Grundsätzlich kommt auch ein ringförmiges Heizelement in Betracht, das entlang der kompletten Außenumfangslinie der Rückhaltevorrichtung 10 in einer im Fuß der Rückhaltevorrichtung 10 gebildeten Ausnehmung 46 angeordnet ist.

Die Rückhaltevorrichtung 10 in FIG 3 ist im Wesentlichen zweiteilig und umfasst ein Unterteil und ein Oberteil. Das Unterteil umfasst die Ablauföffnung 20, die Ablaufwanne 18, die Seitenwand 34 und das Schwellenbauteil 32. Das Oberteil umfasst den Sammler 12 und das Sperrenbauteil 30. Das Sperrenbauteil 30 ist im Schnitt L-förmig und hat ansonsten im weitesten Sinne die Form einer Tasse, wobei der Boden dieser Tasse im Zentrum offen ist, so dass das Sperrenbauteil 30 so auf das Unterteil gesetzt werden kann, dass die Ablaufwanne 18 mit dem offenen Boden fluchtet. Zur Kombination des Unterteils und des Oberteils sind in der Schnittdarstellung in FIG 3 zwei Abstandshalter 48 mit einer Mittelbohrung und in Fortsetzung dieser Mittelbohrung Bohrungen durch das Oberteil und das Unterteil gezeigt. Mittels dieser Bohrungen und einer Schraubverbindung sind Ober- und Unterteil verbindbar, wobei die wirksame Höhe des oder jedes Abstandshalters 48 die Weite des kapillaren Kanals 22 und dementsprechend das Höhenniveau der oberen Begrenzungsfläche 26 relativ zur Seitenwand 34 und zum Bodenniveau der Ablaufwanne 18 bestimmt. Anstelle einer Schraubverbindung kann durch die Bohrungen in Ober- und Unterteil sowie Abstandshalter 48 eine Hülse und ein Stift eingeführt werden, wobei der Stift in die Hülse eingeclipst wird und durch das Einclipsen (Einrasten) die Verbindung hergestellt wird. Anstelle einer solchen Stift- und Hülse-Kombination kommt auch ein Stift mit einem Spreizdom am Ende in Betracht, so dass die Verbindung ebenfalls durch Verrasten hergestellt ist. Als Abstandshalter 48 kommen mehrere äquidistant entlang der Außenumfangslinie der Ablauföffnung 20 verteilte Abstandshalter 48, also zum Beispiel drei, vier oder fünf Abstandshalter 48 in Betracht. Der Sammlerablauf 16 ist in dem Oberteil in Form einer Mehrzahl von randseitigen Bohrungen, Schlitzen oder dergleichen in der Bodenfläche des Sammlers 12 gebildet.

Hinsichtlich der Öffnungsweite des Kanals 22 kann auf die im Zusammenhang mit der Erläuterung der Darstellung in FIG 1 genannten Werte verwiesen werden. Danach beträgt die Öffnungsweite des Kanals 22, also der Abstand zwischen dessen oberer und unterer Begrenzungsfläche 26, 28, auch bei der in FIG 3 gezeigten Ausführungsform etwa 2,5 mm. Entsprechendes gilt für die Höhe der Schwelle 38 und die Höhe der Oberkante der Seitenwand 34, die auch hier etwa 5 bis 6 mm bzw. 11 bis 12 mm betragen. Auch die Verlängerung der Seitenwand 34 gegenüber dem Bodenniveau der Ablaufwanne 18 oder dem Niveau der Oberfläche des horizontalen Schenkels des Sperrenbauteils 30 beträgt bei der in FIG 3 gezeigten Ausführungsform zum Beispiel etwa 1,5 mm. Hinsichtlich der Dimensionierung der Auffangwanne 40 gilt das oben Gesagte.

Die Gesamthöhe der Rückhaltevorrichtung 10 in FIG 3 beträgt etwa 35 mm bei einem Durchmesser von etwa 120 mm. Um die Gesamthöhe der Rückhaltevorrichtung 10 zu erhöhen, kann auf die Oberkante des Sperrenbauteils 30 ein Ring oder sukzessive mehrere Ringe aufgesetzt werden. Ein solcher Ring weist zur Kombination mit der Oberkante des Sperrenbauteils 30 eine passende Form-schlusskontur, also zum Beispiel eine umlaufende Nut und ggf. in der Nut eine Dichtung auf. Die Oberkante des Sperrenbauteils 30 und ein solcher Ring sind dann nach Art einer Nut-Feder-Verbindung miteinander kombinierbar, wobei die Oberkante des Sperrenbauteils 30 als Feder fungiert.

Die runde Bauform der Rückhaltevorrichtung 10 bewirkt, dass die Oberkante der Seitenwand 34 entlang der kompletten Umfangslinie als Überlauf wirkt. Bei einem Durchmesser von 120 mm beträgt die Länge der Umfangslinie im Bereich der Oberkante der Seitenwand 34 etwa 180 mm. Daraus wird ersichtlich, dass die Rückhaltevorrichtung 10 in FIG 3 im Vergleich zu der Rückhaltevorrichtung 10 in FIG 1 mit der dortigen geraden Überlaufkante kleiner gebaut werden kann, denn für eine gleiche wirksame Länge der Überlaufkante müsste die Rückhaltevorrichtung 10 in FIG 1 bereits eine Breite von zumindest 180 mm haben, während die Rückhaltevorrichtung 10 in FIG 3 nur einen Durchmesser von etwa 120 mm hat. Die Rückhaltevorrichtung 10 in FIG 3 ist zum Beispiel, aber nicht notwendig, aus einem Kunststoff gefertigt. Eine Fertigung aus einem Kunststoff ist besonders einfach und effizient, weil die Einzelteile der Rückhaltevorrichtung 10 schnell und mit hoher Maßgenauigkeit als Spritzgussteile gefertigt werden können, zum Beispiel das Unterteil als erstes Spritzgussteil, der Sammler 12 des Oberteils mit einer Mehrzahl von als Sammlerablauf 16 fungierenden Bohrungen oder Schlitzen als zweites Spritzgussteil und das Sperrenbauteil 30 als drittes Spritzgussteil. Der Sammler 12 wird dann von der offenen Seite in das Sperrenbauteil 30 eingesetzt, wobei die Wandstärke des Sperrenbauteils 30 zu diesem Zweck am oberen Ende leicht angefast sein kann, so dass das Einsetzen erleichtert wird. Im eingesetzten Zustand befindet sich der Sammler 12 in einem Paßsitz im Sperrenbauteil 30, wobei das Sperrenbauteil 30 zur Arretierung des eingesetzten Sammlers 12 eine umlaufende Nut aufweisen kann, deren Höhe auf die Materialstärke des Sammlers 12 abgestellt ist. Anstelle einer Verbindung im Paßsitz kommt auch in Betracht, dass der Sammler 12 in das Sperrenbauteil 30 eingeklebt ist, zum Beispiel in eine im Sperrenbauteil 30 umlaufende Nut der oben beschriebenen Art. Grundsätzlich ist das Oberteil, also der Sammler 12 und das Sperrenbauteil 30, auch als einstückiges Spritzgussteil herstellbar. Ein zweiteiliges Oberteil erlaubt aber einfachere Formen.

Die Verwendung von Spritzgussteilen, insbesondere Kunststoffspritzgussteilen, reduziert die Herstellungskosten, denn anders als zum Beispiel bei der aus Metallblechen durch Schweißen und dergleichen gefertigten Rückhaltevorrichtung 10 in FIG 1 ist bei einer Verwendung von Spritzgussteilen nach der Festlegung und Abnahme der Spritzgussform nur noch ein vergleichsweise einfaches Kombinieren der zwei oder drei Spritzgussteile nötig. Speziell die Verwendung von Kunststoffspritzgussteilen macht die Rückhaltevorrichtung 10 unempfindlich gegen mechanische und chemische Einflüsse.

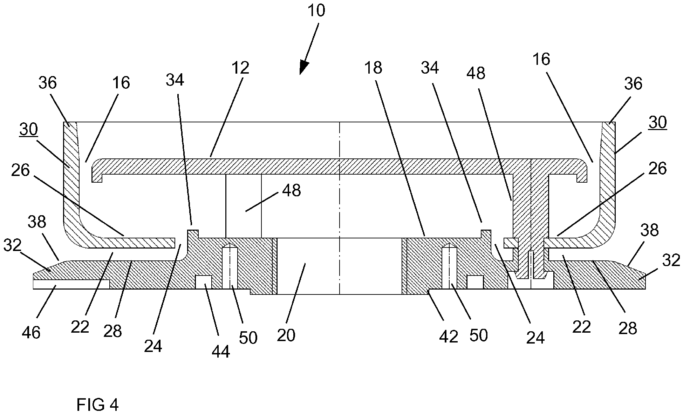

Die Darstellung in FIG 4 zeigt abschließend eine weitere Ausführungsform der Rückhaltevorrichtung 10. Diese Ausführungsform der Rückhaltevorrichtung 10 entspricht weitestgehend der in FIG 3 gezeigten Ausführungsform, so dass zur Vermeidung von Wiederholungen auf die dortigen Ausführungen verwiesen wird. Abweichend zur der in FIG 3 gezeigten Ausführungsform weist der Sammler 12 jetzt keine randseitigen Bohrungen oder Schlitze auf. Vielmehr ist der Sammlerablauf 16 bei der Ausführungsform in FIG 4 dadurch gebildet, dass das den Sammler 12 bildende Bauteil nicht ganz bis an die hier vertikal orientiert gezeigte Sperre 36 heranreicht. Damit ergibt sich eine Konfiguration, die der in FIG 1 gezeigten Konfiguration entspricht.

Der Sammler 12 ist mittels mehrerer Abstandshalter 48, insbesondere mittels einstückig mit dem Sammler 12 verbundener Abstandshalter 48, die an ihrem Ende jeweils ein Verbindungselement, insbesondere ein Rastelement, bei der dargestellten Ausführungsform ein Rastelement in Form eines Spreizdoms, aufweisen, mit dem Unterteil der Rückhaltevorrichtung 10 verbunden. Die Verbindung ist dabei derart, dass die Verbindung des Sammlers 12 mit dem Unterteil gleichzeitig auch die Verbindung des Sperrenbauteils 30 mit dem Unterteil gewährleistet. Dafür sind im Unterteil auf der Oberfläche der unteren Begrenzungsfläche 28 des Kanals 22 ringförmige Erhebungen gebildet, die auch die Weite des kapillaren Kanals 22 bestimmen. Auf diese wird das Sperrenbauteil 30 aufgesetzt. Auf das Sperrenbauteil 30 wird der Sammler 12 aufgesetzt. Die freien Enden der Abstandshalter 48 treten dabei durch im Sperrenbauteil 30 gebildete Bohrungen, die ringförmigen Erhebungen im Unterteil sowie anschließende Bohrungen im Unterteil. Bei der in FIG 4 gezeigten Ausführungsform ist insoweit erkennbar, dass der dort als Rastelement fungierende Spreizdom durch die eben erwähnten Bohrungen hindurchgeführt und im Unterteil verrastet ist. Die Verrastung ist eine besonders einfache und unkomplizierte Art der Verbindung der genannten Elemente, die ohne jegliches Werkzeug möglich ist. Alternativ ist grundsätzlich auch denkbar, dass in die freien Enden der Abstandshalter 48 von einer Unterseite der Rückhaltevorrichtung 10 jeweils eine Schraube eingedreht wird, um so die Verbindung herzustellen.

Bei der Schnittdarstellung in FIG 4 ist nur der rechts gezeigte Abstandshalter 48 geschnitten, so dass dort der als Rastmittel fungierende Spreizdom, die Bohrungen und die ringförmige Erhebung auf der Oberfläche der unteren Begrenzungsfläche 28 des Kanals 22 sichtbar sind. Zur sicheren Befestigung des Sammlers 12, hier des Sammlers 12 und des Sperrenbauteils 30, sind zumindest drei Abstandshalter 48 vorgesehen, die zum Beispiel regelmäßig entlang einer Umfangslinie, also zum Beispiel in Abständen von jeweils 120°, angeordnet sind. Der links dargestellte Abstandshalter 48 ist entsprechend nicht geschnitten gezeigt und befindet sich ausgehend von der Schnittebene im "hinteren" Teil der Rückhaltevorrichtung 10. Dadurch wird auch erkennbar, dass die ringförmigen Erhebungen auf der Oberfläche der unteren Begrenzungsfläche 28 des Kanals 22 diesen Kanal nur an einigen wenigen Stellen unterbrechen und dass ansonsten der Kanal 22 frei bleibt.

Zur Befestigung der Rückhaltevorrichtung 10 an einer Auffangwanne 40 befinden sich im Unterteil der Rückhaltevorrichtung 10 Bohrungen, die hier als Sackbohrungen 50 gezeigt sind. Die Sackbohrungen 50 befinden sich innerhalb der durch die Position der O-Ring-Nut 44 definierten Fläche, so dass selbst wenn die Sackbohrungen 50 als bis zur Ablaufwanne 18 durchgehende Bohrungen ausgeführt wären, aufgrund der Bohrungen keine Gefahr eines Ablaufs von verschmutztem Wasser besteht. Zum einen ist aufgrund der Bauart der Rückhaltevorrichtung 10 sichergestellt, dass keine Verschmutzungen in die Ablaufwanne 18 und damit in solche Bohrungen gelangen können. Zum anderen können aufgrund der im Verhältnis zur Position der Bohrungen außen liegenden O-Ring-Nut 44 auch keine Verschmutzungen entlang der Unterseite der Rückhaltevorrichtung 10 bis zu den Bohrungen vordringen.

Einzelne im Vordergrund stehende Aspekte der hier eingereichten Beschreibung lassen sich damit kurz wie folgt zusammenfassen: Angegeben werden eine Rückhaltevorrichtung 10 sowie ein Verfahren zur Herstellung einer solchen Rückhaltevorrichtung 10, wobei die Rückhaltevorrichtung 10 einen als Regenfang fungierenden Sammler 12 und einen daran anschließenden Sammlerablauf 16, eine unter dem Sammler 12 gebildete Ablaufwanne 18 mit einer Ablauföffnung 20 sowie einen von der Ablauföffnung 20 abgewandten kapillaren Kanal 22 mit einem Kanalzulauf 24 im Inneren der Rückhaltevorrichtung 10 aufweist, wobei der Sammlerablauf 16 ohne Kontakt zur Ablaufwanne 18 oberhalb einer Seitenwand 34 der Ablaufwanne 18 liegt und wobei der Kanalzulauf 24 seitlich versetzt unterhalb einer Ebene mit dem Sammlerablauf 16 liegt. Die Rückhaltevorrichtung 10 zeichnet sich in einer besonderen Ausführungsform durch ausschließlich horizontale und vertikale Flächenabschnitte und rechtwinklige Abkantungen in den verwendeten Blechen aus, so dass sich die Bauteile der Rückhaltevorrichtung 10 schnell, leicht und mit einer hohen Genauigkeit fertigen lassen und anschließend die Rückhaltevorrichtung 10 selbst unter Verwendung solcher Bauteile ebenfalls schnell, leicht und mit einer hohen Genauigkeit herstellbar ist. Die einzige Ausnahme von den ansonsten durchgängig horizontal oder vertikal orientierten Flächen bildet gegebenenfalls die Schwelle 38, diese ist aber am Schwellenbauteil 32 zum Beispiel durch ein Abkanten von 45° gebildet, so dass fertigungstechnisch ebenfalls eine einfache Situation vorherrscht.

**Bezugszeichenliste**

| | | | |
|---|---|---|---|
| 10 | Rückhaltevorrichtung | 34 | Seitenwand (der Ablaufwanne) |
| 12 | Sammler | | |
| 14 | Seitenwange | 36 | Sperre |
| 16 | Sammlerablauf | 38 | Schwelle |
| 18 | Ablaufwanne | 40 | (äußere) Wanne / Auffangwanne |
| 20 | Ablauföffnung | | |
| 22 | Kanal | 42 | Abstellung (am Boden der Rückhaltevorrichtung) |
| 24 | Kanalzulauf | | |
| 26 | obere Begrenzungsfläche (des Kanals) | 44 | O-Ring-Nut |
| | | 46 | Ausnehmung (für Heizelement) |
| 28 | untere Begrenzungsfläche (des Kanals) | | |
| | | 48 | Abstandshalter |
| 30 | Sperrenbauteil | 50 | Sackbohrung |
| 32 | Schwellenbauteil | | |

## Patentansprüche

1. Rückhaltevorrichtung (10) mit
einem Sammler (12) und einem daran anschließenden Sammlerablauf (16),
einer unter dem Sammler (12) gebildeten Ablaufwanne (18) mit einer Ablauföffnung (20),
**gekennzeichnet durch**
einen von der Ablauföffnung (20) abgewandten kapillaren Kanal (22) unterhalb einer einstückig in eine horizontal ausgerichtete, obere Begrenzungsfläche (26) des Kanals (22) auslaufenden vertikalen Sperre (36) und mit einem Kanalzulauf (24) im Inneren der Rückhaltevorrichtung (10) sowie
eine horizontal ausgerichtete untere Begrenzungsfläche (28) des Kanals (22), die einstückig in eine schräge, stückweise schräge oder stückweise vertikale Schwelle (38) ausläuft,
wobei der Sammlerablauf (16) ohne Kontakt zur Ablaufwanne (18) oberhalb einer Seitenwand (34) der Ablaufwanne (18) liegt und
wobei der Kanalzulauf (24) seitlich versetzt unterhalb einer Ebene mit dem Sammlerablauf (16) liegt.

2. Rückhaltevorrichtung (10) nach Anspruch 1, mit einem horizontal ausgerichteten Sammler (12).

3. Rückhaltevorrichtung (10) nach Anspruch 2, mit einem einstückigen, im Schnitt L-förmigen Sperrenbauteil (30), dessen einer Schenkel die Sperre (36) und dessen anderer Schenkel die obere Begrenzungsfläche (26) des Kanals (22) bildet.

4. Rückhaltevorrichtung (10) nach Anspruch 2 oder 3, wobei eine zum Innenraum der Rückhaltevorrichtung (10) gewandte Oberfläche des Sperrenbauteils (30) als Leitfläche für über den Sammlerablauf (16) zuströmendes Wasser fungiert und sich am Ende der Leitfläche der Kanalzulauf (24) und eine Übertrittsmöglichkeit in die Ablaufwanne (18) befinden.

5. Rückhaltevorrichtung (10) nach einem der vorangehenden Ansprüche, mit einer runden Grundkontur und einer rotationssymmetrischen Anordnung des Kanals (22), des Sammlers (12) und der Ablaufwanne (18) um die im Zentrum der Rückhaltevorrichtung (10) gebildete Ablauföffnung (20).

6. Rückhaltevorrichtung (10) nach Anspruch 5, wobei der Sammler (12) mittels mehrerer Abstandshalter (48) gleichzeitig mit einem Sperrenbauteil (30) und einem Unterteil der Rückhaltevorrichtung (10) verbindbar ist.

7. Rückhaltevorrichtung (10) nach Anspruch 6, wobei die gleichzeitige Verbindung von Sammler (12), Sperrenbauteil (30) und Unterteil der Rückhaltevorrichtung (10) mittels am freien Ende der Abstandshalter (48) gebildeter Rastelemente erfolgt.

8. Rückhaltevorrichtung (10) nach einem der vorangehenden Ansprüche, mit Mitteln (30) zum Erzeugen einer bevorzugten Strömungsrichtung von über den Sammlerablauf (16) zuströmendem Wasser in Richtung auf die Ablauföffnung (20).

9. Rückhaltevorrichtung (10) nach Anspruch 8, wobei in Strömungsrichtung von über den Sammlerablauf (16) zuströmendem Wasser zwischen dem Sammlerablauf (16) und der Ablauföffnung (20) nur eine den Kanalzulauf (24) begrenzende Seitenwand (34) der Ablaufwanne (18) liegt.

10. Rückhaltevorrichtung (10) nach einem der vorangehenden Ansprüche, mit einem Bodenniveau der Ablaufwanne (18) unterhalb eines Niveaus des Kanals (22).

11. Rückhaltevorrichtung (10) nach einem der vorangehenden Ansprüche, wobei eine Hinterkante der Ablaufwanne (18) in Relation zu einer Hinterkante des Sammlers (12) nach innen zurückversetzt ist.

12. Rückhaltevorrichtung (10) nach einem der vorangehenden Ansprüche, mit zwei als seitliche Begrenzung fungierenden Seitenwangen (14), in denen Schlitze zur formschlüssigen Aufnahme des Sammlers (12) und eines Sperrenbauteils (30) gebildet sind und deren Außenkontur zum formschlüssigen Anlegen der Ablaufwanne (18) und eines Schwellenbauteils (32) ausgebildet ist.

13. Rückhaltevorrichtung (10) nach Anspruch 12, wobei mit einer oder beiden Seitenwangen (14) jeweils einstückig ein Abdeckteil verbunden ist, das auf eine Außenfläche der jeweiligen Seitenwange (14) klappbar ist und im gebrauchsfähigen Zustand der Rückhaltevorrichtung (10) auf die Seitenwange (14) geklappt ist.

## Claims

1. Retention device (10), with
a collector (12) and an adjoining collector outlet (16),
an outlet trough (18) which is formed under the collector (12) and has an outlet opening (20),
**characterized by**
a capillary channel (22), which faces away from the outlet opening (20), below a vertical barrier (36) which peters out integrally into a horizontally oriented, upper boundary surface (26) of the channel (22), and with a channel inlet (24) in the interior of the retention device (10), and also
a horizontally oriented, lower boundary surface (28) of the channel (22), which boundary surface (28) peters out integrally into an oblique, partially oblique or partially vertical sill (38),
wherein the collector outlet (16) is located above a side wall (34) of the outlet trough (18) without contact with the outlet trough (18), and
wherein the channel inlet (24) is located laterally offset below a plane with the collector outlet (16).

2. Retention device (10) according to Claim 1, with a horizontally oriented collector (12).

3. Retention device (10) according to Claim 2, with an integral barrier component (30) which is L-shaped in section and one limb of which forms the barrier (36) and the other limb of which forms the upper boundary surface (26) of the channel (22).

4. Retention device (10) according to Claim 2 or 3, wherein a surface of the barrier component (30), which surface faces the interior of the retention device (10), acts as a conducting surface for water flowing in via the collector outlet (16), and the channel inlet (24) and a transfer possibility into the outlet trough (18) are located at the end of the conducting surface.

5. Retention device (10) according to one of the preceding claims, with a round basic contour and a rotationally symmetrical arrangement of the channel (22), the collector (12) and the outlet trough (18) around the outlet opening (20) formed in the centre of the retention device (10).

6. Retention device (10) according to Claim 5, wherein the collector (12) is connectable simultaneously by means of a plurality of spacers (48) to a barrier component (30) and to a lower part of the retention device (10).

7. Retention device (10) according to Claim 6, wherein the simultaneous connection of collector (12), barrier component (30) and lower part of the retention device (10) takes place by means of latching elements formed at the free end of the spacers (48).

8. Retention device (10) according to one of the preceding claims, with means (30) for producing a preferred direction of flow of water, which flows in via the collector outlet (16), in the direction of the outlet opening (20).

9. Retention device (10) according to Claim 8, wherein only a side wall (34) of the outlet trough (18), the side wall bounding the channel inlet (24), is located between the collector outlet (16) and the outlet opening (20) in the flow direction of water flowing in via the collector outlet (16).

10. Retention device (10) according to one of the preceding claims, with a bottom level of the outlet trough (18) below a level of the channel (22).

11. Retention device (10) according to one of the preceding claims, wherein a rear edge of the outlet trough (18) is set back inwards in relation to a rear edge of the collector (12).

12. Retention device (10) according to one of the preceding claims, with two side members (14) which act as a lateral boundary and in which slots are formed for the form-fitting mounting of the collector (12) and of a barrier component (30) and the outer contour of which side members (14) is designed for the form-fitting placing thereagainst of the outlet trough (18) and of a sill component (32).

13. Retention device (10) according to Claim 12, wherein a covering part is connected in each case integrally to one or both side members (14), said covering part being foldable onto an outer surface of the respective side member (14) and being folded onto the side member (14) in the operable state of the retention device (10).

## Revendications

1. Dispositif de retenue (10) avec :
un collecteur (12) et une évacuation de collecteur (16) raccordée à lui, un bac d'évacuation (18) formé sous le collecteur (12) avec une ouverture d'évacuation (20) ;
**caractérisé par** :
un canal (22) capillaire opposé à l'ouverture d'évacuation (20) placé en dessous d'un blocage (36) vertical se terminant d'un seul tenant en une surface de délimitation (26) supérieure orientée de façon horizontale du canal (22) et avec une amenée de canal (24) à l'intérieur du dispositif de retenue (10) ; ainsi que
une surface de délimitation (28) inférieure orientée de façon horizontale du canal (22) se terminant d'un seul tenant en un seuil (38) oblique, partiellement oblique ou partiellement vertical ;
l'évacuation de collecteur (16) reposant sans contact par rapport au bac d'évacuation (18), au-dessus d'une paroi latérale (34) du bac d'évacuation (18) ; et
l'amenée de canal (24) reposant en côté de façon décalée en dessous d'un plan avec l'évacuation de collecteur (16).

2. Dispositif de retenue (10) selon la revendication 1, avec un collecteur (12) orienté de façon horizontale.

3. Dispositif de retenue (10) selon la revendication 2, avec un composant de blocage (30) d'un seul tenant en coupe en forme de L, dont un côté forme le blocage (36) et dont l'autre côté forme la surface de délimitation (26) supérieure du canal (22).

4. Dispositif de retenue (10) selon la revendication 2 ou 3, une surface, orientée vers l'espace intérieur du dispositif de retenue (10), du composant de blocage (30) servant de surface conductrice pour l'eau affluant via l'évacuation de collecteur (16) et l'amenée de canal (24) et une possibilité de débordement de trop-plein dans le bac d'évacuation (18) se trouvant à la fin de la surface conductrice.

5. Dispositif de retenue (10) selon l'une quelconque des revendications précédentes, avec un contour de base rond et un agencement symétrique en rotation du canal (22), du collecteur (12) et du bac d'évacuation (18) autour de l'ouverture d'évacuation (20) formée au centre du dispositif de retenue (10).

6. Dispositif de retenue (10) selon la revendication 5, le collecteur (12) pouvant être relié simultanément à un composant de blocage (30) et une partie inférieure du dispositif de retenue (10) à l'aide de plusieurs entretoises (48).

7. Dispositif de retenue (10) selon la revendication 6, la liaison simultanée du collecteur (12), du composant de blocage (30) et de la partie inférieure du dispositif de retenue (10) se produisant à l'aide d'éléments d'arrêt formés au niveau de l'extrémité libre des entretoises (48).

8. Dispositif de retenue (10) selon l'une quelconque des revendications précédentes, avec des moyens (30) de production d'une direction d'écoulement préférée d'eau affluant via l'évacuation de collecteur (16) en direction de l'ouverture d'évacuation (20).

9. Dispositif de retenue (10) selon la revendication 8, seule une paroi latérale (34), délimitant l'amenée de canal (24), du bac d'évacuation (18) reposant dans la direction d'écoulement de l'eau s'écoulant via l'évacuation de collecteur (16), entre l'évacuation de collecteur (16) et l'ouverture d'évacuation (20).

10. Dispositif de retenue (10) selon l'une quelconque des revendications précédentes, avec un niveau de fond du bac d'évacuation (18) en dessous d'un niveau du canal (22).

11. Dispositif de retenue (10) selon l'une quelconque des revendications précédentes, une arête arrière du bac d'évacuation (18) étant décalée de façon rentrée vers l'intérieur par rapport à une arête arrière du collecteur (12).

12. Dispositif de retenue (10) selon l'une quelconque des revendications précédentes, avec deux joues latérales (14) servant de délimitation latérale dans lesquelles des fentes sont formées pour loger par complémentarité de formes le collecteur (12) et un composant de blocage (30) et dont le contour extérieur est réalisé de façon à reposer par complémentarité de formes contre le bac d'évacuation (18) et un composant de seuil (32).

13. Dispositif de retenue (10) selon la revendication 12, une partie de recouvrement étant reliée respectivement d'un seul tenant à une des joues latérales (14) ou au deux, ladite partie pouvant être rabattue sur une surface extérieure de la joue latérale (14) respective et étant rabattue sur la joue latérale (14) dans l'état fonctionnel du dispositif de retenue (10).
